# EUROPEAN PATENT SPECIFICATION

(11) **EP 3 989 506 B1**
(45) Date of publication and mention of the grant of the patent: **08.01.2025**
(21) Application number: 20840704.9
(22) Date of filing: 16.07.2020
(51) Int. Cl.: H04L 67/1008

(54) **SERVER COMMUNICATION METHOD, BROADBAND ACCESS SERVER, AND SYSTEM**
SERVERKOMMUNIKATIONSVERFAHREN, BREITBANDZUGANGSSERVER UND SYSTEM
PROCÉDÉ DE COMMUNICATION DE SERVEUR, SERVEUR D'ACCÈS À LARGE BANDE ET SYSTÈME

(30) Priority: 16.07.2019 CN 201910641253
(43) Date of publication of application: 27.04.2022
(73) Proprietor: Huawei Technologies Co., Ltd., Longgang District Shenzhen, Guangdong 518129 (CN)
(72) Inventor: ZHANG, Yaokun, Shenzhen, Guangdong 518129 (CN); ZHU, Yun, Shenzhen, Guangdong 518129 (CN)
(74) Representative: Pfenning, Meinig & Partner mbB
(86) International application number: PCT/CN2020/102496
(87) International publication number: WO 2021/008595

(56) References cited:
- WO-A1-2018/113633
- CN-A- 102 387 083
- CN-A- 102 387 222
- CN-A- 103 501 297
- CN-A- 104 901 989
- CN-A- 106 936 729
- CN-A- 110 166 579
- US-A1- 2008 101 396

## Description

### TECHNICAL FIELD

The present invention relates to the field of communications, and specifically, to a server communication method, a broadband access server, a system and a computer-readable storage medium.

### BACKGROUND

When a terminal accesses a network via a broadband access server (broadband access server, BAS), session (session) resources of the BAS are required. As density of population in a region varies, when there are more terminals in an area, more session resources need to be provided by a BAS in the area; and when there are fewer terminals in an area, fewer session resources need to be provided by a BAS in the area.

When there are a relatively large number of terminal devices in a first area, session resources of a BAS in the first area may be insufficient. In this case, only when the session resources of the BAS in the first area are added, all the terminal devices in the first area can access a network via the BAS in the first area. In addition, there may be a relatively small number of terminal devices in a second area. After all the terminal devices in the second area access a network, a BAS in the second area still has some session resources in an idle state.

In such a setting, when a region has different areas, session resources in some areas may be insufficient, while session resources in other areas may be in an idle state. As a result, session resources are unevenly distributed, and session resource utilization is relatively low.

US 2008/101396 A1 discloses a packet forwarding apparatus to be located between a plurality of user terminals and a plurality of redundant gateways connected to a transit network for the Internet. A protocol processing unit of the packet forwarding apparatus has a load distribution management table for storing connection load status information of each of said redundant gateways in association with an identifier of the gateway. The protocol processing unit is configured to receive a connection initiation request packet transmitted from one of said user terminals to connect the user terminal to said transit network, forward the connection initiation request packet to said plurality of redundant gateways, receive a plurality of response packets replied from said redundant gateways in response to the connection initiation request packet within a predetermined period of time, forward only one response packet transmitted from particular one of said redundant gateways to the user terminal which is the source of said connection initiation request packet, and forward communication control packets and user packets subsequently received from the user terminal to said particular gateway.

### SUMMARY

The invention is set out in the appended set of claims. A first aspect of the embodiments of the present invention provides a server communication method, where the method includes: After a first BAS receives a connection request of a first terminal, if the first BAS determines that a quantity of remaining session resources of the first BAS is less than or equal to a first threshold, the first BAS sends the connection request of the first BAS to a second BAS, so that the first terminal accesses a network via the second BAS. The second BAS is determined by the first BAS by using a BAS pool communication protocol, and the second BAS and the first BAS are two different BASs in a BAS pool. According to this method, when the session resources of the first BAS are insufficient, the first terminal that originally should access the network via the first BAS can access the network via the second BAS that belongs to the same BAS pool as the first BAS. In this way, session resources can be shared among servers in the BAS pool, thereby improving session resource utilization.

Optionally, with reference to the first aspect, in a first possible implementation of the first aspect, before the first BAS sends the connection request of the first terminal to a second BAS, the method further includes: When the quantity of remaining session resources of the first BAS is less than or equal to a second threshold, the first BAS sends, according to the BAS pool communication protocol, a resource request packet to at least one BAS in the BAS pool except the first BAS, where the at least one BAS includes the second BAS, and the resource request packet is used to indicate the second BAS to send a quantity of remaining session resources of the second BAS to the first BAS; the first BAS receives the quantity of remaining session resources of the second BAS from the second BAS; and that the first BAS sends the connection request of the first terminal to a second BAS includes: When the quantity of remaining session resources of the second BAS is greater than or equal to a third threshold, the first BAS sends the connection request of the first terminal to the second BAS. In this way, the first BAS may obtain a quantity of session resources of another BAS in the BAS pool by using the resource request packet, thereby determining that the quantity of session resources of the second BAS is sufficient, so that the first terminal can access the network via the second BAS.

Optionally, with reference to the first possible implementation of the first aspect, in a second possible implementation of the first aspect, after the first BAS sends the connection request of the first terminal to a second BAS, the method further includes: The first BAS determines that a layer-2 tunnel between the first BAS and the second BAS is not clear; and when the first BAS receives a reconnection request of the first terminal, the first BAS sends the reconnection request of the first terminal to a third BAS, so that the first terminal accesses the network via the third BAS. The third BAS is a BAS different from the second BAS in the at least one BAS, the third BAS is determined by the first BAS by using the BAS pool communication protocol, and a quantity of remaining session resources of the third BAS is greater than or equal to a fourth threshold. When the layer-2 tunnel between the first BAS and the second BAS is not clear, the first BAS may borrow session resources of the third BAS in the same BAS pool, thereby enhancing stability of the solution and providing an alternative solution.

Optionally, with reference to the second possible implementation of the first aspect, in a third possible implementation of the first aspect, before the first BAS sends the reconnection request of the first terminal to a third BAS, the method further includes: The first BAS sends a probe packet to the second BAS, where the probe packet is used to indicate the second BAS to send a response packet to the first BAS, and the response packet is used by the first BAS to determine whether the layer-2 tunnel between the first BAS and the second BAS is clear; and that the first BAS determines that a layer-2 tunnel between the first BAS and the second BAS is not clear includes: If the first BAS does not receive the response packet within a first time range, the first BAS determines that the layer-2 tunnel between the first BAS and the second BAS is not clear. The first BAS may determine, by using the probe packet, whether the layer-2 tunnel between the first BAS and the second BAS is clear. When the layer-2 tunnel is not clear can be detected in a timely manner, thereby improving timeliness of the solution.

Optionally, with reference to the second or the third possible implementation of the first aspect, in a fourth possible implementation of the first aspect, after the first BAS determines that a layer-2 tunnel between the first BAS and the second BAS is not clear, the method further includes: The first BAS receives a connection request of a second terminal, where the second terminal is different from the first terminal; and when the first BAS determines that the quantity of remaining session resources of the first BAS is less than or equal to the first threshold, the first BAS receives the connection request of the second terminal to the third BAS, so that the second terminal accesses the network via the third BAS. When the layer-2 tunnel between the first BAS and the second BAS is not clear, the first BAS may borrow session resources of the third BAS, thereby enhancing stability of the solution.

Optionally, with reference to the first aspect or the first possible implementation of the first aspect, in a fifth possible implementation of the first aspect, after the first BAS sends the connection request of the first terminal to a second BAS, the method further includes: The first BAS sends a resource alarm packet from the second BAS, where the resource alarm packet is used to indicate that the quantity of remaining session resources of the second BAS is less than the third threshold; and when the first BAS receives a connection request of a third terminal, the first BAS sends the connection request of the third terminal to a fourth BAS, so that the third terminal accesses the network via the fourth BAS. The fourth BAS is a BAS different from the second BAS in the at least one BAS, the fourth BAS is determined by the first BAS by using the BAS pool communication protocol, and a quantity of remaining session resources of the fourth BAS is greater than or equal to a fifth threshold. When session resources of the second BAS are running out, the first BAS may continue to borrow session resources from the fourth BAS, thereby enhancing diversity of the solution.

Optionally, with reference to the first aspect to the third possible implementation of the first aspect, in a sixth possible implementation of the first aspect, the first BAS receives a connection request of a fourth terminal; and when the first BAS determines that the quantity of remaining session resources of the first BAS is greater than the second threshold, the first BAS determines that the fourth terminal accesses the network via the first BAS. When the remaining session resources of the first BAS are sufficient, the first BAS may not need to borrow session resources, so that the fourth terminal accesses the network via the first BAS.

Optionally, with reference to the first aspect or the first possible implementation of the first aspect, in a seventh possible implementation of the first aspect, after the first BAS sends the connection request of the first terminal to a second BAS, the method further includes: The first BAS sends uplink traffic to the second BAS. The uplink traffic is received by the first BAS from the first terminal. After the first terminal accesses the network via the second BAS, the uplink traffic of the first terminal is forwarded to the second BAS via the first BAS.

Optionally, with reference to the first aspect or the first possible implementation of the first aspect, in an eighth possible implementation of the first aspect, after the first BAS sends the connection request of the first terminal to a second BAS, the method further includes: The first BAS sends downlink traffic to the first terminal. The downlink traffic is received by the first BAS from the second BAS. After the first terminal accesses the network via the second BAS, the downlink traffic generated by the second BAS is forwarded to the first BAS via the first BAS.

A second aspect of the embodiments of the present invention provides a broadband access server (BAS), where the BAS is a first BAS in a BAS pool, and the first BAS includes: a receiving unit, configured to receive a connection request of a first terminal, where the first BAS is any BAS in a BAS pool; a processing unit, configured to determine that a quantity of remaining session resources of the first BAS is less than or equal to a first threshold; and a sending unit, configured to: when the processing unit determines that the quantity of remaining session resources of the first BAS is less than or equal to the first threshold, send the connection request of the first terminal to the second BAS, so that the first terminal accesses a network via the second BAS. The second BAS is determined by the first BAS by using a BAS pool communication protocol, and the second BAS is a BAS in the BAS pool that is different from the first BAS. According to this method, when the session resources of the first BAS are insufficient, the first terminal that originally should access the network via the first BAS can access the network via the second BAS that belongs to the same BAS pool as the first BAS. In this way, session resources can be shared among servers in the BAS pool, thereby improving session resource utilization.

Optionally, with reference to the second aspect, in a first possible implementation of the second aspect, the processing unit in the first BAS is further configured to: before the sending unit sends the connection request of the first terminal to the second BAS, determine that the quantity of remaining session resources of the first BAS is less than or equal to a second threshold; the sending unit is further configured to: when the processing unit determines that the quantity of remaining session resources of the first BAS is less than or equal to the second threshold, send, according to the BAS pool communication protocol, a resource request packet to at least one BAS in the BAS pool except the first BAS, where the at least one BAS includes the second BAS, and the resource request packet is used to indicate the second BAS to send a quantity of remaining session resources of the second BAS to the first BAS; the receiving unit is further configured to receive the quantity of remaining session resources of the second BAS from the second BAS; the processing unit is further configured to determine that the quantity of remaining session resources of the second BAS is greater than or equal to a third threshold; and the sending unit is further configured to: when the processing unit determines that the quantity of remaining session resources of the second BAS is greater than or equal to the third threshold, send the connection request of the first terminal to the second BAS.

Optionally, with reference to the first possible implementation of the second aspect, in a second possible implementation of the second aspect, the processing unit in the first BAS is further configured to: after the sending unit sends the connection request of the first terminal to the second BAS, determine that a layer-2 tunnel between the first BAS and the second BAS is not clear; the receiving unit is further configured to receive a reconnection request from the first terminal; and the sending unit is further configured to send the reconnection request of the first terminal to a third BAS, so that the first terminal accesses the network via the third BAS. The third BAS is a BAS different from the second BAS in the at least one BAS, the third BAS is determined by the first BAS by using the BAS pool communication protocol, and a quantity of remaining session resources of the third BAS is greater than or equal to a fourth threshold.

Optionally, with reference to the second possible implementation of the second aspect, in a third possible implementation of the second aspect, the sending unit in the first BAS is further configured to: before the sending unit sends the reconnection request of the first terminal to the third BAS, send a probe packet to the second BAS, where the probe packet is used to indicate the second BAS to send a response packet to the sending unit, and the response packet is used by the first BAS to determine whether the layer-2 tunnel between the first BAS and the second BAS is clear; and the processing unit is further configured to: when the sending unit does not receive the response packet within a first time range, determine that the layer-2 tunnel between the first BAS and the second BAS is not clear.

Optionally, with reference to the second or the third possible implementation of the second aspect, in a fourth possible implementation of the second aspect, the receiving unit in the first BAS is further configured to: after the processing unit determines that the layer-2 tunnel between the first BAS and the second BAS is not clear, receive a connection request of a second terminal, where the second terminal is different from the first terminal; the processing unit is further configured to determine that the quantity of remaining session resources of the first BAS is less than or equal to the first threshold; and the sending unit is further configured to send the connection request of the second terminal to the third BAS, so that the second terminal accesses the network via the third BAS.

Optionally, with reference to the second aspect or the first possible implementation of the second aspect, in a fifth possible implementation of the second aspect, the receiving unit in the first BAS is further configured to receive a resource alarm packet from the second BAS, where the resource alarm packet is used to indicate that the quantity of remaining session resources of the second BAS is less than the third threshold; the receiving unit is further configured to receive a connection request of a third terminal; and the sending unit is further configured to send the connection request of the third terminal to a fourth BAS, so that the third terminal accesses the network via the fourth BAS. The fourth BAS is a BAS different from the second BAS in the at least one BAS, the fourth BAS is determined by the first BAS by using the BAS pool communication protocol, and a quantity of remaining session resources of the fourth BAS is greater than or equal to a fifth threshold.

Optionally, with reference to any one of the second aspect to the third possible implementation of the second aspect, in a sixth possible implementation of the second aspect, the receiving unit is further configured to receive a connection request of a fourth terminal; and the processing unit is further configured to: when the quantity of remaining sessions of the first BAS is greater than the second threshold, determine that the fourth terminal accesses the network via the first BAS.

Optionally, with reference to the second aspect or the first possible implementation of the second aspect, in a seventh possible implementation of the second aspect, the receiving unit in the first BAS is further configured to receive uplink traffic from the first terminal; and the sending unit is further configured to send the uplink traffic to the second BAS.

Optionally, with reference to the second aspect or the first possible implementation of the second aspect, in an eighth possible implementation of the second aspect, the receiving unit in the first BAS is further configured to receive downlink traffic from the second BAS; and the sending unit is further configured to send the downlink traffic to the first terminal.

A third aspect of the embodiments of the present invention provides a system. The system is the broadband access server (BAS) pool according to any one of the first aspect and the possible implementations of the first aspect, the BAS pool includes the first BAS according to any one of the first aspect and the possible implementations of the first aspect, and the BAS pool includes at least two BASs.

A fourth aspect of the embodiments of the present invention provides a first broadband access server (BAS), where the first BAS includes: a processor and a memory. The memory stores program instructions, and the processor is configured to execute the program instructions stored in the memory, to perform the method according to any one of the first aspect and the possible implementations of the first aspect.

A fifth aspect of the embodiments of the present invention provides a computer-readable storage medium, including program instructions. When the program instructions run on a computer device, the computer device is enabled to perform the method according to any one of the first aspect and the possible implementations of the first aspect.

The embodiments of the present invention provide a server communication method, a broadband access server, and a system. The method includes: After a first BAS receives a connection request of a first terminal, if the first BAS determines that a quantity of remaining session resources of the first BAS is less than or equal to a first threshold, the first BAS sends the connection request of the first BAS to a second BAS, so that the first terminal accesses a network via the second BAS. The second BAS is determined by the first BAS by using a BAS pool communication protocol, and the second BAS and the first BAS are two different BASs in a BAS pool. According to this method, when the session resources of the first BAS are insufficient, the first terminal that originally should access the network via the first BAS can access the network via the second BAS that belongs to the same BAS pool as the first BAS. In this way, session resources can be shared among servers in the BAS pool, thereby improving session resource utilization.

### BRIEF DESCRIPTION OF DRAWINGS

FIG. 1 is a schematic diagram of an embodiment of a server communication method according to an embodiment of the present invention;
FIG. 2 is a schematic diagram of another embodiment of a server communication method according to an embodiment of the present invention;
FIG. 3 is a schematic diagram of another embodiment of a server communication method according to an embodiment of the present invention;
FIG. 4 is a schematic diagram of another embodiment of a server communication method according to an embodiment of the present invention;
FIG. 5 is a schematic diagram of an embodiment of a broadband access server according to an embodiment of the present invention;
FIG. 6 is a schematic diagram of another embodiment of a broadband access server according to an embodiment of the present invention; and
FIG. 7 is a schematic diagram of an embodiment of a system according to an embodiment of the present invention.

### DESCRIPTION OF EMBODIMENTS

All other embodiments obtained by a person skilled in the art based on the embodiments of this application without creative efforts shall fall within the protection scope of this application.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those modules, but may include other modules not expressly listed or inherent to such a process, method, system, product, or device.

As distribution of population in a region is uneven, when there are a relatively large number of terminal devices in a first area, session resources of a BAS in the first area may be insufficient. In this case, only when the session resources of the BAS in the first area are added, all the terminal devices in the first area can access a network via the BAS in the first area. In addition, there may be a relatively small number of terminal devices in a second area. After all the terminal devices in the second area access a network, a BAS in the second area still has some session resources in an idle state. In such a setting, when a region has different areas, session resources in some areas may be insufficient, while session resources in other areas may be in an idle state. As a result, session resources are unevenly distributed, and session resource utilization is relatively low.

Therefore, the embodiments of the present invention provide a server communication method. According to this method, BASs in a region can form a BAS pool, and BASs in the BAS pool can borrow session resources from one another, thereby improving session resource utilization. A BAS pool communication protocol (BAS pool communication protocol, BPCP) may be defined in this server pool, and the BASs in the BAS pool communicate according to the BPCP.

The BPCP may include the following seven types of packets:
1. Resource request packet: If a quantity of remaining session resources of a BAS in the BAS pool is less than or equal to a second threshold, and session resources of the BAS are running out, the BAS may send a resource request packet to at least one BAS in the BAS pool. The BAS may be referred to as an aid-seeking BAS. If the BAS that receives the resource request packet is currently in a borrowed state, the BAS that receives the resource request packet sends, to the aid-seeking BAS, information indicating that session resources of the BAS cannot be borrowed.
2. Resource reply packet: The BAS that receives the resource request packet in 1 sends a resource reply packet to the aid-seeking BAS, where the resource reply packet may include a quantity of remaining session resources of the BAS that receives the resource request packet. After receiving the resource reply packet, the aid-seeking BAS determines, based on the resource reply packet, a BAS from which session resources are borrowed. The aid-seeking BAS may determine, based on a quantity of remaining session resources of each BAS, at least one BAS from which session resources are borrowed. For example, a BAS having a largest quantity of remaining session resources is used as a BAS from which session resources are borrowed; or a BAS having a largest quantity of remaining session resources may be used as a primary BAS from which session resources are borrowed, and a BAS having a second largest quantity of remaining session resources may be used as a secondary BAS from which session resources are borrowed.
3. Service request packet: After the aid-seeking BAS determines, in 2, the BAS from which session resources are borrowed, the aid-seeking BAS sends the service request packet to the BAS from which session resources are borrowed, where the service request packet is used to request to borrow session resources.
4. Service reply packet: After receiving the service request packet, the BAS from which session resources are borrowed may send a service reply packet to the aid-seeking BAS, where the service reply packet may include a media access control (media access control, MAC) address of the BAS from which session resources are borrowed. After receiving the service reply packet, the aid-seeking BAS records the MAC address of the BAS from which session resources are borrowed, encapsulates the MAC address of the BAS from which session resources are borrowed into a connection request of a terminal that needs to access a network via the aid-seeking BAS, and sends the connection request packet to the BAS from which session resources are borrowed.
5. Resource alarm packet: When a quantity of remaining session resources of the BAS from which session resources are borrowed is less than a third threshold, resources of the BAS from which session resources are borrowed are also running out. The BAS from which session resources are borrowed may send a resource alarm packet to all BASs in the BAS pool. After receiving the resource alarm packet, a BAS that has a borrowing relationship with the BAS that sends the resource alarm packet may redetermine a BAS from which session resources are borrowed. After receiving the resource alarm packet, other BASs that have no borrowing relationship with the BAS that sends the resource alarm packet may identify the BAS that sends the resource alarm packet as a BAS from which session resources cannot be borrowed. If the BAS that sends the resource alarm packet is the primary BAS from which session resources are borrowed and that is determined by the aid-seeking BAS in 2, the aid-seeking BAS may alternatively send the connection request of the terminal that needs to access the network to the secondary BAS from which session resources are borrowed and that is determined by the aid-seeking BAS.
6. Borrowing release packet: When all session resources borrowed by the aid-seeking BAS from the BAS from which session resources are borrowed are released, that is, all terminals having connection requests forwarded by the aid-seeking BAS and accessing the network via the BAS from which session resources are borrowed are disconnected from the network, the BAS from which session resources are borrowed sends a borrowing release packet to the aid-seeking BAS. If a quantity of remaining session resources of the aid-seeking BAS is greater than the second threshold in this case, the aid-seeking BAS is released from a borrowing state.
7. Borrowing release acknowledgment packet: When the aid-seeking BAS receives the borrowing release packet, the aid-seeking BAS sends a borrowing release acknowledgment packet to the BAS from which session resources are borrowed. After receiving the borrowing release acknowledgment packet, the BAS from which session resources are borrowed determines that the borrowed state is released.

In a packet sent between the BASs, a message type (messagetype) field may be used to identify a type of the packet. For example, when a value of the field is 1, it indicates that the packet type is a resource request packet; when the value is 2, the packet type is a resource reply packet; when the value is 3, the packet type is a service request packet; when the value is 4, the packet type is a service reply packet; when the value is 5, the packet type is a resource alarm packet; when the value is 6, the packet type is a borrowing release packet; and when the value is 7, the packet type is a borrowing release acknowledgment packet.

In this packet, a status (status) field may be used to identify a resource status of the BAS. For example, when a value of the field is 0, it may indicate that resources of the BAS are idle; and when the value of the field is 1, it may indicate that resources of the BAS are busy. When a quantity of remaining resources of the BAS is less than or equal to a specific threshold, resources of the BAS may enter a busy state.

The foregoing packets may be transmitted according to the transmission control protocol (transmission control protocol, TCP) or the user datagram protocol (user datagram protocol, UDP). For example, packets, such as a resource request packet and a resource alarm packet, that need to be sent to all BASs in the BAS pool may be transmitted by using the UDP. Packets, such as a resource reply packet, a service request packet, a service reply packet, a borrowing release packet, and a borrowing release acknowledgment packet, that need to be sent only to a particular BAS may be transmitted by using the TCP.

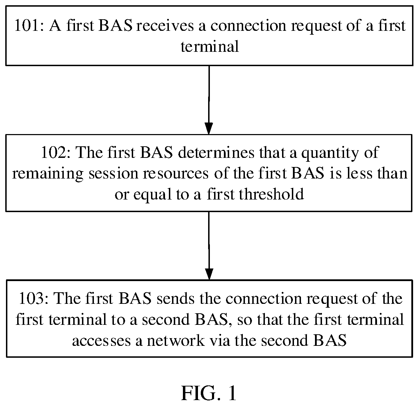

Embodiment 1 of the present invention provides a server communication method. Refer to FIG. 1. The method includes the following steps.

101: A first BAS receives a connection request of a first terminal.

The first BAS receives the connection request of the first terminal. The first terminal is a terminal in an area in which the first BAS is located. The first BAS determines, based on the connection request of the first terminal, that the first terminal has a requirement for accessing a network.

102: The first BAS determines that a quantity of remaining session resources of the first BAS is less than or equal to a first threshold.

Session resources of each BAS are limited, and when a terminal accesses a network via the BAS, session resources of the BAS are consumed. When the quantity of remaining session resources of the first BAS is less than or equal to the first threshold, the session resources of the first BAS are almost running out. For example, the first threshold may be 10% of a quantity of session resources of the first BAS. In this case, the first terminal cannot access the network via the first BAS.

103: The first BAS sends the connection request of the first terminal to a second BAS, so that the first terminal accesses the network via the second BAS.

The first BAS sends the connection request of the first terminal to the second BAS in the BAS pool, so that the first terminal accesses the network via the second BAS. The first BAS and the second BAS are two different BASs in the BAS pool. In this case, the first BAS is an aid-seeking BAS, and the second BAS is a BAS from which session resources are borrowed and that is determined by the first BAS. When the first terminal accesses the network via the second BAS, the first BAS enters a borrowing state, the second BAS enters a borrowed state, and a borrowing relationship forms between the first BAS and the second BAS. The first terminal cannot sense which BAS in the BAS pool is specifically used by the first terminal to access the network.

It should be noted that any two BASs in the BAS pool may interwork through a layer-2 tunnel, where the layer-2 tunnel may include networks such as an Ethernet virtual private network (Ethernet virtual private network, EVPN), a layer-2 virtual private network (layer 2 virtual private network, L2VPN), and a virtual extensible local area network (virtual extensible local area network, VXLAN). For example, an EVPN or a virtual private local area network service (virtual private LAN Service, VPLS) may be set between any two BASs in the BAS pool, so that a layer-2 tunnel pseudo wire (pseudo wire, PW) between the BASs in the BAS pool is reachable. Specifically, a sub-interface of a bound EVPN or VPLS may be configured on the same interface for a go-online sub-interface of each BAS, and a loopback virtual Ethernet (virtual Ethernet, VE) interface is also deployed. The L2VPN is bound to the PW, and a layer-3 virtual private network (layer 3 virtual private network, L3VPN) serves as an access ingress of a BAS.

Before the first BAS sends the connection request of the first terminal to the second BAS, the first BAS may first send a service request packet to the second BAS, so as to request to borrow session resources from the second BAS. After receiving the service request packet, the second BAS may send a service reply packet to the first BAS, where the service reply packet includes a MAC address of the second BAS. The first BAS may encapsulate the MAC address of the second BAS into the connection request of the first terminal, and then send the connection request of the first terminal to the second BAS, so that the first terminal accesses the network via the second BAS.

After the first terminal accesses the network via the second BAS, if the first terminal generates uplink traffic, the first BAS first receives the uplink traffic generated by the first terminal, and then forwards the uplink traffic to the second BAS via the layer-2 tunnel. Downlink traffic generated by the second BAS is first sent to the first BAS through the layer-2 tunnel, and the first BAS forwards the downlink traffic to the first terminal.

If the second BAS determines that all session resources borrowed by the first BAS are released, that is, all terminals having connection requests forwarded via the first BAS and accessing the network via the second BAS are disconnected from the network, the second BAS sends a borrowing release packet to the first BAS. When the first BAS receives the borrowing release packet and determines that the quantity of remaining session resources of the first BAS is greater than a second threshold, the first BAS is released from the borrowing state. After the first BAS receives the borrowing release packet, the first BAS may send a borrowing release acknowledgment packet to the second BAS. After receiving the borrowing release acknowledgment packet, the second BAS confirms that the borrowed state is released, and the borrowing relationship between the first BAS and the second BAS is released.

It may be understood that, after the first BAS receives the borrowing release packet, if the quantity of remaining session resources of the first BAS is still less than or equal to the second threshold, and the first BAS receives a connection request of a terminal again, the first BAS may forward the connection request to the second BAS, so that the terminal that needs to access a network accesses the network via the second BAS. The first BAS may enter the borrowing state again, the second BAS enters the borrowed state again, and a borrowing relationship forms between the first BAS and the second BAS again.

It should be noted that the network for the first terminal may be disconnected from the second BAS due to network congestion or for other reasons. Then, the first terminal has a requirement for accessing the network again. If there is still a borrowing relationship between the first BAS and the second BAS at this time, the first terminal may continue to access the network via the second BAS.

Embodiment 1 of the present invention provides a server communication method. According to this method, when the session resources of the first BAS are insufficient, the first terminal that originally should access the network via the first BAS can access the network via the second BAS that belongs to the same BAS pool as the first BAS. In this way, session resources can be shared among servers in the BAS pool, thereby improving session resource utilization.

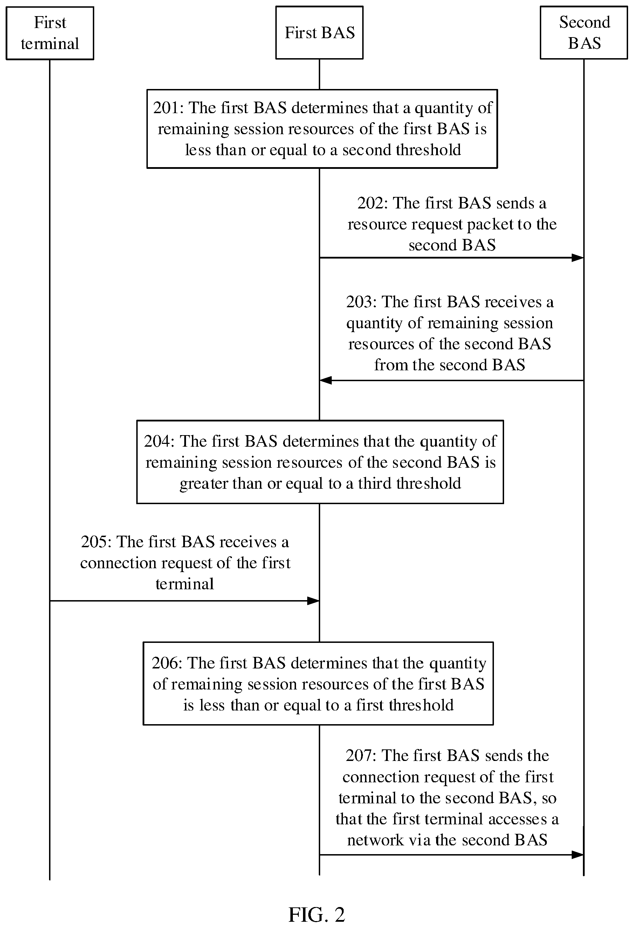

In Embodiment 1, before the first BAS sends the connection request of the first terminal to the second BAS, the first BAS needs to first determine whether a quantity of remaining session resources of the second BAS is sufficient. The first BAS may first send a resource request packet to other BASs in the BAS pool, and then determine, according to a received resource reply packet, that session resources of the second BAS are sufficient, and the first terminal can access the network via the second BAS. Embodiment 2 of the present invention provides a server communication method. Refer to FIG. 2. The method includes the following steps.

201: A first BAS determines that a quantity of remaining session resources of the first BAS is less than or equal to a second threshold.

The first BAS determines that the quantity of remaining session resources of the first BAS is less than or equal to the second threshold. For example, the second threshold may be 30% of a total quantity of session resources of the first BAS. In this case, a terminal in an area in which the first BAS is located may continue to access the network via the first BAS. However, an occupancy rate of session resources of the first BAS is relatively high.

202: The first BAS sends a resource request packet to a second BAS.

The first BAS sends the resource request packet to at least one BAS in a BAS pool, where the at least one BAS includes the second BAS, and the first packet is used to query a quantity of remaining session resources of the at least one BAS.

It should be noted that, when the quantity of remaining session resources of the first BAS is less than the second threshold, a value of a status field in the first packet sent by the first BAS to the at least one BAS may be 1, indicating that resources of the BAS are busy, and session resources of the first BAS cannot be borrowed by other BASs in the BAS pool.

203: The first BAS receives a quantity of remaining session resources of the second BAS from the second BAS.

In step 202, after receiving the resource request packet sent by the first BAS, the at least one BAS may send a resource reply packet to the first BAS, where the resource reply packet includes the quantity of remaining session resources of the at least one BAS. The at least one BAS includes the second BAS.

204: The first BAS determines that the quantity of remaining session resources of the second BAS is greater than or equal to a third threshold.

The first BAS determines the second BAS in the at least one BAS based on the resource reply packet fed back by the at least one BAS. The quantity of remaining session resources of the second BAS is greater than or equal to the third threshold. For example, the third threshold may be 30% of a total quantity of session resources of the second BAS. The first BAS may determine the second BAS as a BAS from which session resources are borrowed. The third threshold and the second threshold may be the same or different, and the total quantity of session resources of the first BAS and the total quantity of session resources of the second BAS may be the same or different. This is not limited herein.

The first BAS may alternatively determine, in the at least one BAS based on the resource reply packet sent by the at least one BAS, a plurality of BASs from which session resources are borrowed. For example, the first BAS may use a BAS having a largest quantity of remaining session resources as a primary BAS from which session resources are borrowed, and use a BAS having a second largest quantity of remaining session resources as a secondary BAS from which session resources are borrowed.

After the first BAS determines the second BAS as the BAS from which session resources are borrowed, the first BAS may send a service request packet to the second BAS, where the service request packet is used to request to borrow session resources. After receiving the service request packet, the second BAS may send a service reply packet to the first BAS, where the service reply packet may include a MAC address of the second BAS.

205: The first BAS receives a connection request of a first terminal.

For description of this step, refer to step 101 in Embodiment 1, and details are not described herein again.

206: The first BAS determines that the quantity of remaining session resources of the first BAS is less than or equal to a first threshold.

For description of this step, refer to step 102 in Embodiment 1, and details are not described herein again.

207: The first BAS sends the connection request of the first terminal to the second BAS, so that the first terminal accesses the network via the second BAS.

For description of this step, refer to step 103 in Embodiment 1, and details are not described herein again.

It should be noted that, if the quantity of remaining session resources of the first BAS is greater than the second threshold because a terminal is disconnected from the network or for other reasons, when the first BAS receives a connection request of the terminal again, the terminal that needs to access a network may access the network via the first BAS.

In Embodiment 2, before the first BAS sends the connection request of the first terminal to the second BAS, the first BAS may first determine that the remaining session resources of the second BAS are sufficient; and after determining that the session resources of the second BAS can support the first terminal in accessing the network via the second BAS, the first BAS sends the connection request of the first terminal to the second BAS. In this way, it can be ensured that the first terminal can successfully access the network via the second BAS.

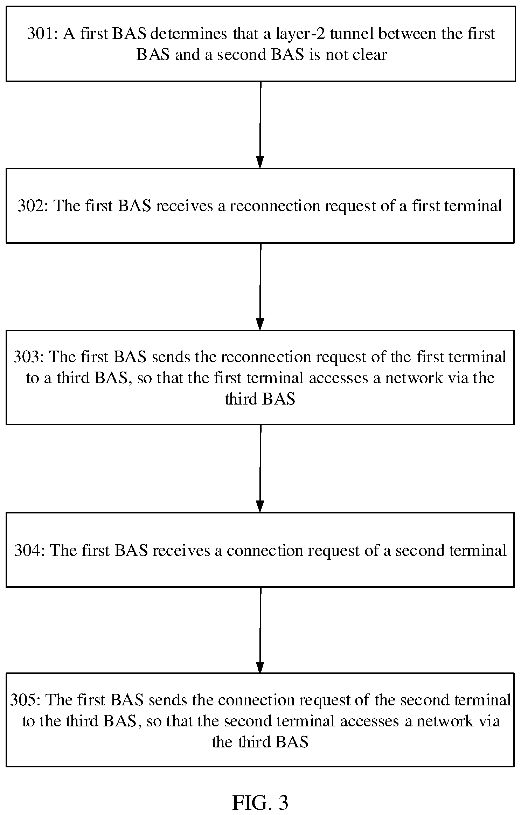

In Embodiment 1 and Embodiment 2, after the first BAS sends the connection request of the first terminal to the second BAS, the first BAS may monitor, in real time, whether a layer-2 tunnel between the first BAS and the second BAS is clear. The first BAS may detect, by using a bidirectional forwarding detection (bidirectional forwarding detection, BFD) technology, a network quality analyzer (network quality analyzer, NQA) technology, or other technologies, whether the layer-2 tunnel between the first BAS and the second BAS is clear. If the first BAS determines that the layer-2 tunnel between the first BAS and the second BAS is not clear, the first terminal can sense that the network is disconnected. In this case, the first terminal sends a reconnection request to the first BAS, and the first BAS forwards the reconnection request to a third BAS, so that the first terminal accesses the network via the third BAS. In addition, when the first BAS receives a connection request of a second terminal, the first BAS also forwards the connection request of the second terminal to the third BAS, so that the second terminal accesses the network via the third BAS. As shown in FIG. 3, Embodiment 3 includes the following steps.

301: A first BAS determines that a layer-2 tunnel between the first BAS and a second BAS is not clear.

The first BAS may send a probe packet to the second BAS, where the probe packet is used to detect whether the layer-2 tunnel between the first BAS and the second BAS is clear. If the first BAS does not receive, within a first time range, a response packet sent by the second BAS, the first BAS may determine that the layer-2 tunnel between the first BAS and the second BAS is not clear. The first time range may be preset.

It may be understood that, if the first BAS receives, within the first time range, the response packet sent by the second BAS, the first BAS may determine that the layer-2 tunnel between the first BAS and the second BAS is clear. In this case, the first BAS may continue to borrow session resources of the second BAS, so that a terminal that originally should access a network via the first BAS accesses the network via the second BAS.

It should be noted that the first BAS sends a connection request of a terminal to the second BAS and borrows the session resources of the second BAS only when it is determined that the layer-2 tunnel between the first BAS and the second BAS is clear. Therefore, the moment when the first BAS sends a connection request of the first terminal to the second BAS, the layer-2 tunnel between the first BAS and the second BAS is clear. The first BAS continuously sends the probe packet to the second BAS. After receiving a resource reply packet sent by the second BAS, the first BAS may send the probe packet to the second BAS every preset period of time to continuously monitor whether the layer-2 tunnel between the first BAS and the second BAS is clear.

302: The first BAS receives a reconnection request of the first terminal.

When the first BAS detects, by using the probe packet, that the layer-2 tunnel between the first BAS and the second BAS is not clear, the first terminal can also sense that the network is disconnected. In this case, the first terminal sends the reconnection request to the first BAS. It should be noted that, the reconnection request and the connection request of the first terminal may be the same or different. This is not limited herein. The first terminal cannot sense which BAS in the BAS pool is used by the first terminal to access the network.

303: The first BAS sends the reconnection request of the first terminal to a third BAS, so that the first terminal accesses the network via the third BAS.

In step 301, when the first BAS determines that the layer-2 tunnel between the first BAS and the second BAS is not clear, the first BAS may send the reconnection request of the first terminal to the third BAS, so that the first terminal re-accesses the network via the third BAS. A borrowing relationship forms between the first BAS and the third BAS.

Before the first BAS sends a connection request of a second terminal to the third BAS, the first BAS may send a resource request packet to the third BAS. After receiving the resource request packet, the third BAS feeds back a status of remaining session resources of the third BAS. When the first BAS determines that a quantity of remaining session resources of the third BAS is greater than or equal to a fourth threshold, the first BAS sends a service request packet to the third BAS, so as to request to borrow session resources from the third BAS. For example, the fourth threshold may be 30% of a total quantity of session resources of the third BAS. After receiving the service request packet, the third BAS may send a service reply packet to the first BAS, where the service reply packet includes a MAC address of the third BAS. The first BAS may encapsulate the MAC address of the third BAS into the reconnection request of the first terminal, and then send the reconnection request of the first terminal to the third BAS, so that the first terminal accesses the network via the third BAS. A total quantity of session resources of the first BAS, a total quantity of session resources of the second BAS, and the total quantity of session resources of the third BAS may be the same or different. This is not limited herein.

In this case, the second BAS may be a primary BAS from which session resources are borrowed and that is determined by the first BAS, and the third BAS may be a secondary BAS from which session resources are borrowed and that is determined by the first BAS. The second BAS and the third BAS may be determined simultaneously. For understanding, refer to step 204 in Embodiment 2. When a layer-2 tunnel between the first BAS and the primary BAS from which session resources are borrowed is not clear, the first BAS may cause a terminal that needs to access a network to access the network via the secondary BAS from which session resources are borrowed.

When the first BAS determines that the layer-2 tunnel between the first BAS and the second BAS is not clear, the first BAS may alternatively send the resource request packet to other BASs in the BAS pool again, and select, in the BAS pool, the third BAS as a new BAS from which session resources are borrowed. When the third BAS is determined is not limited herein.

If the third BAS determines that all session resources borrowed by the first BAS are released, that is, all terminals having connection requests forwarded via the first BAS and accessing the network via the third BAS are disconnected from the network, the third BAS sends a borrowing release packet to the first BAS. When the first BAS receives the borrowing release packet and determines that a quantity of remaining session resources of the first BAS is greater than a second threshold, the first BAS is released from a borrowing state. After the first BAS receives the borrowing release packet, the first BAS may send a borrowing release acknowledgment packet to the third BAS. After receiving the borrowing release acknowledgment packet, the third BAS confirms that a borrowed state is released, and the borrowing relationship between the first BAS and the third BAS is released.

It may be understood that, after the first BAS receives the borrowing release packet, if the quantity of remaining session resources of the first BAS is still less than or equal to the second threshold, and the first BAS receives a go-online request of a terminal again, the first BAS may forward the go-online request to the third BAS, so that the terminal that needs to access a network accesses the network via the third BAS. The first BAS may enter the borrowing state again, the third BAS enters the borrowed state again, and a borrowing relationship forms between the first BAS and the third BAS again.

304: The first BAS receives the connection request of the second terminal.

The first BAS receives the connection request of the second terminal. The second terminal is a terminal in an area in which the first BAS is located. The first BAS determines, according to the connection request of the second terminal, that the second terminal has a requirement for accessing a network. The second terminal is different from the first terminal.

305: The first BAS sends the connection request of the second terminal to the third BAS, so that the second terminal accesses the network via the third BAS.

In step 301, when the first BAS determines that the layer-2 tunnel between the first BAS and the second BAS is not clear, the first BAS sends the connection request of the second terminal to the third BAS, so that the second terminal accesses the network via the third BAS.

It should be noted that, after the first BAS receives a resource reply packet sent by the third BAS, the first BAS may also continuously send the probe packet to the third BAS, so as to monitor whether the layer-2 tunnel between the first BAS and the third BAS is clear. If the layer-2 tunnel between the first BAS and the third BAS is not clear, the first BAS borrows resources from other BASs in the resource pool. Before the first BAS sends the connection request of the second terminal to the third BAS, the first BAS needs to determine that the layer-2 tunnel between the first BAS and the third BAS is clear.

Embodiment 3 provides a server communication method. In this method, if the layer-2 tunnel between the first BAS and the second BAS is not clear, the first BAS may borrow session resources of the third BAS in the BAS pool, so that a terminal that needs to access a network accesses the network via the third BAS. In this way, when session resources of the second BAS cannot be borrowed, session resources of the third BAS may be borrowed, thereby providing an emergency measure in a case of emergency and improving stability of the solution.

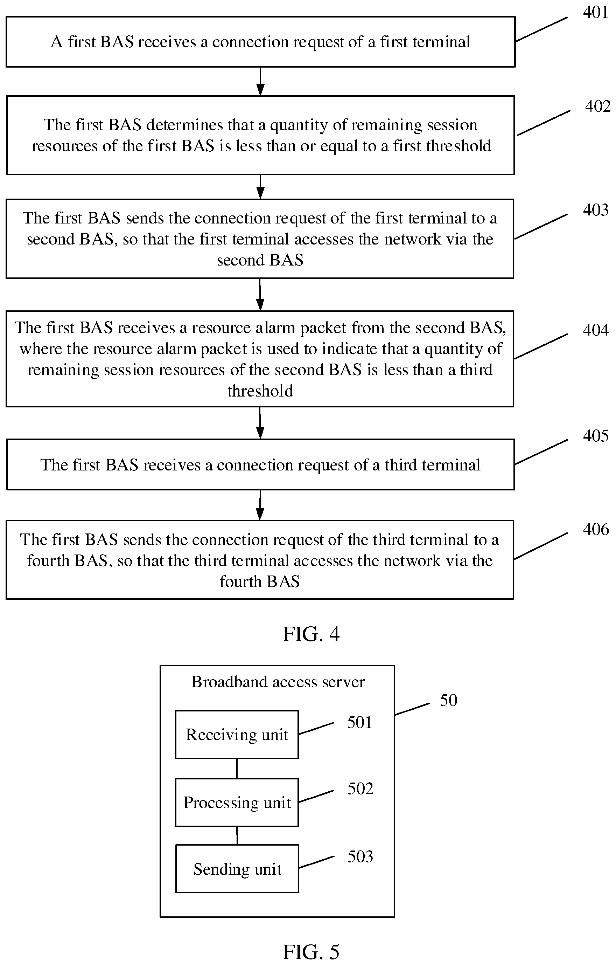

In Embodiment 1 and Embodiment 2, after a borrowing relationship forms between the first BAS and the second BAS, the first BAS may send the connection request of the terminal to the second BAS, so that the terminal that originally should access a network via the first BAS accesses the network via the second BAS. In addition, a terminal in an area in which the second BAS is located also accesses the network via the second terminal. When a quantity of remaining session resources of the second BAS is less than a third threshold, session resources of the second BAS are also running out. If the quantity of remaining session resources of the first BAS is still less than or equal to the second threshold, the first BAS needs to determine a fourth BAS, and borrow session resources of the fourth BAS. The fourth BAS may be the same as or different from the third BAS in Embodiment 3, which is not limited herein. As shown in FIG. 4, Embodiment 4 includes the following steps.

401: A first BAS receives a connection request of a first terminal.

For understanding of this step, refer to step 101 in Embodiment 1 and step 205 in Embodiment 2, and details are not described herein again.

402: The first BAS determines that a quantity of remaining session resources of the first BAS is less than or equal to a first threshold.

For understanding of this step, refer to step 102 in Embodiment 1 and step 206 in Embodiment 2, and details are not described herein again.

403: The first BAS sends the connection request of the first terminal to a second BAS, so that the first terminal accesses the network via the second BAS.

For understanding of this step, refer to step 103 in Embodiment 1 and step 207 in Embodiment 2, and details are not described herein again.

404: The first BAS receives a resource alarm packet from the second BAS, where the resource alarm packet is used to indicate that a quantity of remaining session resources of the second BAS is less than a third threshold.

The first BAS receives the resource alarm packet from the second BAS, where the resource alarm packet is used to indicate that the quantity of remaining session resources of the second BAS is less than the third threshold.

It should be noted that the second BAS may send the resource alarm packet to all BASs in a BAS pool, and the first BAS has a borrowing relationship with the second BAS. After receiving the resource alarm packet, the first BAS needs to borrow session resources of other BASs in the BAS pool. After receiving the resource alarm packet, a BAS that has no borrowing relationship with the second BAS may identify the second BAS as a BAS from which session resources cannot be borrowed.

405: The first BAS receives a connection request of a third terminal.

The first BAS receives the connection request of the third terminal. The third terminal is a terminal in an area in which the first BAS is located. The first BAS determines, according to the connection request of the third terminal, that the third terminal has a requirement for accessing a network.

406: The first BAS sends the connection request of the third terminal to a fourth BAS, so that the third terminal accesses the network via the fourth BAS.

In step 404, the first BAS determines, based on the resource alarm packet sent by the second BAS, that the quantity of remaining session resources of the second BAS is less than the third threshold. The first BAS sends the connection request of the third terminal to the fourth BAS, so that the third terminal accesses the network via the fourth BAS. A borrowing relationship forms between the first BAS and the fourth BAS, and the first BAS may have a borrowing relationship with a plurality of BASs in the BAS pool. The borrowing relationship between the first BAS and the second BAS, and the borrowing relationship between the first BAS and the fourth BAS may exist simultaneously.

Uplink traffic and downlink traffic of a terminal having a connection request forwarded by the first BAS and then accessing the network via another BAS in the BAS pool are both forwarded on the first BAS. In this case, if the borrowing relationship between the first BAS and the second BAS is not released, uplink traffic and downlink traffic generated by the terminal having the connection request forwarded by the first BAS and then going online via the second BAS are forwarded on the first BAS; and uplink traffic and downlink traffic generated by the terminal having the connection request forwarded by the first BAS and then going online via the fourth BAS are also forwarded on the first BAS. For understanding, refer to step 103 in Embodiment 1, and details are not described herein again.

Before the first BAS sends the connection request of the third terminal to the fourth BAS, the first BAS may send a resource request packet to the fourth BAS. After receiving the resource request packet, the fourth BAS feeds back a status of remaining session resources of the fourth BAS. When the first BAS determines that a quantity of remaining session resources of the fourth BAS is greater than a fifth threshold, the first BAS sends a service request packet to the fourth BAS, so as to request to borrow session resources from the fourth BAS. For example, the fifth threshold may be 30% of a total quantity of session resources of the third BAS. After receiving the service request packet, the fourth BAS may send a service reply packet to the first BAS, where the service reply packet includes a MAC address of the fourth BAS. The first BAS may encapsulate the MAC address of the fourth BAS into the connection request of the third terminal, and then send the connection request of the third terminal to the fourth BAS, so that the third terminal accesses the network via the fourth BAS.

In this case, the second BAS may be a primary BAS from which session resources are borrowed and that is determined by the first BAS, and the fourth BAS may be a secondary BAS from which session resources are borrowed and that is determined by the first BAS. For understanding, refer to step 204 in Embodiment 2. When session resources of the primary BAS from which session resources are borrowed and that is determined by the first BAS is running out, the first BAS may borrow session resources of the secondary BAS from which session resources are borrowed.

When the first BAS determines that session resources of the second BAS are running out, the fourth BAS may also be a BAS from which session resources are borrowed and that is selected in the BAS pool again by using the resource request. When the fourth BAS is determined is not limited herein.

If the fourth BAS determines that all session resources borrowed by the first BAS are released, that is, all terminals having connection requests forwarded via the first BAS and accessing the network via the fourth BAS are disconnected from the network, the fourth BAS sends a borrowing release packet to the first BAS. When the first BAS receives the borrowing release packet and determines that the quantity of remaining session resources of the first BAS is greater than a second threshold, the first BAS is released from a borrowing state. After the first BAS receives the borrowing release packet, the first BAS may send a borrowing release acknowledgment packet to the fourth BAS. After receiving the borrowing release acknowledgment packet, the fourth BAS confirms that a borrowed state is released, and the borrowing relationship between the first BAS and the fourth BAS is released.

It may be understood that, after the first BAS receives the borrowing release packet, if the quantity of remaining session resources of the first BAS is still less than or equal to the second threshold, and the first BAS receives a connection request of a terminal again, the first BAS may forward the connection request to the fourth BAS, so that the terminal that needs to access a network accesses the network via the fourth BAS. The first BAS may enter the borrowing state again, the fourth BAS enters the borrowed state again, and a borrowing relationship forms between the first BAS and the fourth BAS again.

In Embodiment 4, when the quantity of remaining session resources of the second BAS is less than the third threshold, session resources of the second BAS are also running out. If the quantity of remaining session resources of the first BAS is still less than or equal to the second threshold, the first BAS needs to determine the fourth BAS, and borrow session resources of the fourth BAS. In this way, when session resources of the second BAS are running out, the first BAS may continue to borrow session resources from the fourth BAS, which may enhance integrity and flexibility of the solution.

Embodiment 5 provides a broadband access server 50, where the broadband access server 50 is the first BAS in Embodiment 1 to Embodiment 4. Referring to FIG. 5, the broadband access server 50 may include a receiving unit 501, a processing unit 502, and a sending unit 503.

The receiving unit 501 is configured to receive a connection request of a first terminal, where the first BAS is any BAS in a BAS pool. For understanding, refer to step 101 in Embodiment 1, step 205 in Embodiment 2, and step 401 in Embodiment 4, and details are not described herein again.

The receiving unit 501 is further configured to receive a quantity of remaining session resources of a second BAS from the second BAS. For understanding, refer to step 203 in Embodiment 2, and details are not described herein again.

The receiving unit 501 is further configured to receive a reconnection request from the first terminal. For understanding, refer to step 302 in Embodiment 3, and details are not described herein again.

The receiving unit 501 is further configured to: after the processing unit 502 determines that a layer-2 tunnel between the first BAS and the second BAS is not clear, receive a connection request of a second terminal, where the second terminal is different from the first terminal. For understanding, refer to step 304 in Embodiment 3, and details are not described herein again.

The receiving unit 501 is further configured to receive a resource alarm packet from the second BAS, where the resource alarm packet is used to indicate that the quantity of remaining session resources of the second BAS is less than a third threshold. For understanding, refer to step 404 in Embodiment 4, and details are not described herein again.

The receiving unit 501 is further configured to receive a connection request of a third terminal. For understanding, refer to step 405 in Embodiment 4, and details are not described herein again.

The receiving unit 501 is further configured to receive uplink traffic from the first terminal. For understanding, refer to step 103 in Embodiment 1, and details are not described herein again.

The receiving unit 501 is further configured to receive downlink traffic from the second BAS. For understanding, refer to step 103 in Embodiment 1, and details are not described herein again.

The processing unit 502 is configured to determine that a quantity of remaining session resources of the first BAS is less than or equal to a first threshold. For understanding, refer to step 102 in Embodiment 1, step 206 in Embodiment 2, and step 402 in Embodiment 4, and details are not described herein again.

The processing unit 502 is further configured to: before the sending unit 503 sends the connection request of the first terminal to the second BAS, determine that the quantity of remaining session resources of the first BAS is less than or equal to a second threshold. For understanding, refer to step 201 in Embodiment 2, and details are not described herein again.

The processing unit 502 is further configured to determine that the quantity of remaining session resources of the second BAS is greater than or equal to the third threshold. For understanding, refer to step 204 in Embodiment 2, and details are not described herein again.

The processing unit 502 is further configured to determine that a layer-2 tunnel between the first BAS and the second BAS is not clear. For understanding, refer to step 301 in Embodiment 3, and details are not described herein again.

The sending unit 503 is configured to: when the processing unit 502 determines that the quantity of remaining session resources of the first BAS is less than or equal to the first threshold, send the connection request of the first terminal to the second BAS, so that the first terminal accesses a network via the second BAS, where the second BAS is determined by the first BAS by using a BAS pool communication protocol, and the second BAS is a BAS in the BAS pool that is different from the first BAS. For understanding, refer to step 103 in Embodiment 1, step 207 in Embodiment 2, and step 403 in Embodiment 4, and details are not described herein again.

The sending unit 503 is further configured to: when the processing unit 502 determines that the quantity of remaining session resources of the first BAS is less than or equal to the second threshold, send, according to the BAS pool communication protocol, a resource request packet to at least one BAS in the BAS pool except the first BAS, where the at least one BAS includes the second BAS, and the resource request packet is used to indicate the second BAS to send the quantity of remaining session resources of the second BAS to the first BAS. For understanding, refer to step 202 in Embodiment 2, and details are not described herein again.

The sending unit 503 is further configured to send the reconnection request of the first terminal to a third BAS, so that the first terminal accesses the network via the third BAS, where the third BAS is a BAS different from the second BAS in the at least one BAS, the third BAS is determined by the first BAS by using the BAS pool communication protocol, and a quantity of remaining session resources of the third BAS is greater than or equal to a fourth threshold. For understanding, refer to step 303 in Embodiment 3, and details are not described herein again.

The sending unit 503 is further configured to: before the sending unit 503 sends the reconnection request of the first terminal to the third BAS, send a probe packet to the second BAS, where the probe packet is used to indicate the second BAS to send a response packet to the sending unit, and the response packet is used by the first BAS to determine whether the layer-2 tunnel between the first BAS and the second BAS is clear. For understanding, refer to step 301 in Embodiment 3, and details are not described herein again.

The sending unit 503 is further configured to send the connection request of the second terminal to the third BAS, so that the second terminal accesses the network via the third BAS. For understanding, refer to step 305 in Embodiment 3, and details are not described herein again.

The sending unit 503 is further configured to send the connection request of the third terminal to a fourth BAS, so that the third terminal accesses the network via the fourth BAS, where the fourth BAS is a BAS different from the second BAS in the at least one BAS, an address of the fourth BAS is obtained by the first BAS by using the BAS pool communication protocol, and a quantity of remaining session resources of the fourth BAS is greater than or equal to a fifth threshold. For understanding, refer to step 406 in Embodiment 4, and details are not described herein again.

The sending unit 503 is further configured to send the uplink traffic to the second BAS. For understanding, refer to step 103 in Embodiment 1, and details are not described herein again.

The sending unit 503 is further configured to send the downlink traffic to the first terminal. For understanding, refer to step 103 in Embodiment 1, and details are not described herein again.

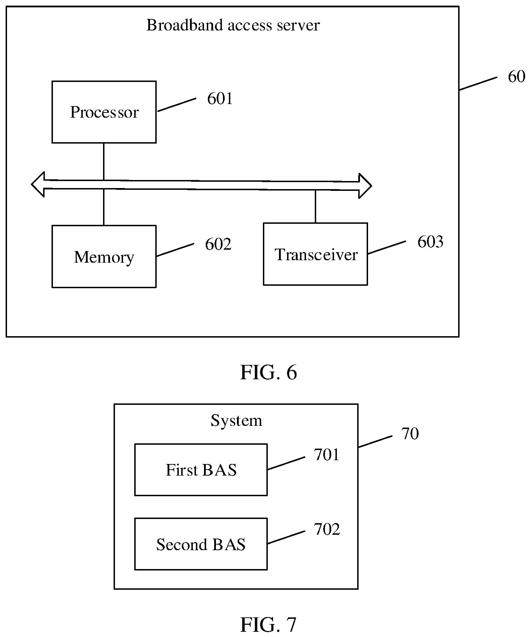

Embodiment 6 provides a broadband access server 60, where the broadband access server 60 may be the first BAS in Embodiment 1 to Embodiment 4. Refer to FIG. 6. The broadband access server 60 may include a processor 601, a memory 602, and a transceiver 603, where the processor 601 is connected to the memory 602 and the transceiver 603.

The broadband access server 60 is an apparatus having a hardware structure, and may be configured to implement the function modules in the first BAS described in FIG. 5. For example, a person skilled in the art may figure out that the processing unit 502 shown in FIG. 5 may be implemented by the processor 601 invoking code in the memory 602, and the receiving unit 501 and the sending unit 503 in FIG. 5 may be implemented by the transceiver 603.

Optionally, the foregoing processor 601 may be one or more central processing units (central processing unit, CPU), a microprocessor, an application-specific integrated circuit (application-specific integrated circuit, ASIC), or one or more integrated circuits configured to control program execution in the solution of this application.

The memory 602 is configured to store program instructions, and the processor 601 is configured to execute the program instructions stored in the memory 602, so that the broadband access server performs the following processing:
determining that a quantity of remaining session resources of the first BAS is less than or equal to a first threshold, where for understanding, refer to step 102 in Embodiment 1, step 206 in Embodiment 2, and step 402 in Embodiment 4, and details are not described herein again;
before the transceiver 603 sends a connection request of a first terminal to a second BAS, determining that the quantity of remaining session resources of the first BAS is less than or equal to a second threshold, where for understanding, refer to step 201 in Embodiment 2, and details are not described herein again;
determining that a quantity of remaining session resources of the second BAS is greater than or equal to a third threshold, where for understanding, refer to step 204 in Embodiment 2, and details are not described herein again; and
determining that a layer-2 tunnel between the first BAS and the second BAS is not clear, where for understanding, refer to step 301 in Embodiment 3, and details are not described herein again.

The memory 602, the processor 601, and the transceiver 603 are connected to each other through a bus 604, where the bus 604 may be a peripheral component interconnect (peripheral component interconnect, PCI for short) bus, an extended industry standard architecture (extended industry standard architecture, EISA for short), or the like. The bus may be classified into an address bus, a data bus, a control bus, and the like.

The transceiver 603 may not only receive a message, but also send a message, and the transceiver 603 may be understood with reference to the receiving unit 501 and the sending unit 503 in Embodiment 5. The transceiver 603 may be configured to perform the following steps:
receiving the connection request of the first terminal, where the first BAS is any BAS in a BAS pool; and for understanding, refer to step 101 in Embodiment 1, step 205 in Embodiment 2, and step 401 in Embodiment 4, and details are not described herein again;
receiving the quantity of remaining session resources of the second BAS from the second BAS, where for understanding, refer to step 203 in Embodiment 2, and details are not described herein again;
receiving a reconnection request from the first terminal, where for understanding, refer to step 302 in Embodiment 3, and details are not described herein again;
after the processor 601 determines that the layer-2 tunnel between the first BAS and the second BAS is not clear, receiving a connection request of a second terminal, where the second terminal is different from the first terminal; and for understanding, refer to step 304 in Embodiment 3, and details are not described herein again;
receiving a resource alarm packet from the second BAS, where the resource alarm packet is used to indicate that the quantity of remaining session resources of the second BAS is less than a third threshold; and for understanding, refer to step 404 in Embodiment 4, and details are not described herein again;
receiving a connection request of a third terminal, where for understanding, refer to step 405 in Embodiment 4, and details are not described herein again;
receiving uplink traffic from the first terminal, where for understanding, refer to step 103 in Embodiment 1, and details are not described herein again;
receiving downlink traffic from the second BAS, where for understanding, refer to step 103 in Embodiment 1, and details are not described herein again;
when the processor 601 determines that the quantity of remaining session resources of the first BAS is less than or equal to the first threshold, sending the connection request of the first terminal to the second BAS, so that the first terminal accesses a network via the second BAS, where the second BAS is determined by the first BAS by using a BAS pool communication protocol, and the second BAS is a BAS in the BAS pool that is different from the first BAS; and for understanding, refer to step 103 in Embodiment 1, step 207 in Embodiment 2, and step 403 in Embodiment 4, and details are not described herein again;
when the processor 601 determines that the quantity of remaining session resources of the first BAS is less than or equal to the second threshold, sending, according to the BAS pool communication protocol, a resource request packet to at least one BAS in the BAS pool except the first BAS, where the at least one BAS includes the second BAS, and the resource request packet is used to indicate the second BAS to send the quantity of remaining session resources of the second BAS to the first BAS; and for understanding, refer to step 202 in Embodiment 2, and details are not described herein again;
sending the reconnection request of the first terminal to a third BAS, so that the first terminal accesses the network via the third BAS, where the third BAS is a BAS different from the second BAS in the at least one BAS, the third BAS is determined by the first BAS by using the BAS pool communication protocol, and a quantity of remaining session resources of the third BAS is greater than or equal to a fourth threshold; and for understanding, refer to step 303 in Embodiment 3, and details are not described herein again;
before the reconnection request of the first terminal is sent to the third BAS, sending a probe packet to the second BAS, where the probe packet is used to indicate the second BAS to send a response packet to the sending unit, and the response packet is used by the first BAS to determine whether the layer-2 tunnel between the first BAS and the second BAS is clear; and for understanding, refer to step 301 in Embodiment 3, and details are not described herein again;
sending the connection request of the second terminal to the third BAS, so that the second terminal accesses the network via the third BAS, where for understanding, refer to step 305 in Embodiment 3, and details are not described herein again;
sending the connection request of the third terminal to a fourth BAS, so that the third terminal accesses the network via the fourth BAS, where the fourth BAS is a BAS different from the second BAS in the at least one BAS, an address of the fourth BAS is obtained by the first BAS by using the BAS pool communication protocol, and a quantity of remaining session resources of the fourth BAS is greater than or equal to a fifth threshold; and for understanding, refer to step 406 in Embodiment 4, and details are not described herein again;
sending the uplink traffic to the second BAS, where for understanding, refer to step 103 in Embodiment 1, and details are not described herein again; and
sending the downlink traffic to the first terminal, where for understanding, refer to step 103 in Embodiment 1, and details are not described herein again.

Embodiment 7 provides a system 70, where the system 70 may be the BAS pool described in Embodiment 1 to Embodiment 4, and the BAS pool includes at least two BASs: a first BAS 701 and a second BAS 702. Any two BASs in the system 70 may communicate with each other via a layer-2 tunnel. For understanding, refer to step 103 in Embodiment 1. When the first BAS 701 determines that a quantity of remaining session resources of the first BAS is less than or equal to a first threshold, the first BAS 701 may send a connection request of a first terminal to the second BAS, so that the first terminal accesses a network via the second BAS. For understanding, refer to Embodiment 1, and details are not described herein again.

A server communication method, a broadband access server, and a system that are provided in the embodiments of this application are described in detail above. The principle and implementation of this application are described herein through specific examples. The description about the embodiments of this application is merely provided to help understand the method and core ideas of this application. Therefore, the content of specification shall not be construed as a limit to this application. Although this application is described in detail with reference to the foregoing embodiments, a person of ordinary skill in the art should understand that the person may still make modifications to the technical solutions described in the foregoing embodiments or make equivalent replacements to some technical features thereof, without departing from the scope of the technical solutions of the embodiments of this application.

## Claims

1. A server communication method, comprising:
receiving (101, 205), by a first broadband access server, BAS, a connection request of a first terminal, wherein the first BAS is any BAS in a BAS pool; and
when the first BAS determines that a quantity of remaining session resources of the first BAS is less than or equal to a first threshold and a quantity of remaining session resources of a second BAS is greater than or equal to a third threshold, sending (103, 207), by the first BAS, the connection request of the first terminal to the second BAS, so that the first terminal accesses to a network via the second BAS, wherein the second BAS is determined by the first BAS by using a BAS pool communication protocol, and the second BAS is a BAS in the BAS pool that is different from the first BAS.

2. The server communication method according to claim 1, wherein before the sending (103, 207), by the first BAS, the connection request of the first terminal to the second BAS, the method further comprises:
when the quantity of remaining session resources of the first BAS is less than or equal to a second threshold, sending (202), by the first BAS according to the BAS pool communication protocol, a resource request packet to at least one BAS in the BAS pool except the first BAS, wherein the at least one BAS comprises the second BAS, and the resource request packet is used to indicate the second BAS to send the quantity of remaining session resources of the second BAS to the first BAS; and
receiving (203), by the first BAS, the quantity of remaining session resources of the second BAS from the second BAS.

3. The server communication method according to claim 2, wherein after the sending (103, 207), by the first BAS, the connection request of the first terminal to the second BAS, the method further comprises:
determining (301), by the first BAS, that a layer-2 tunnel between the first BAS and the second BAS is not clear; and
when the first BAS receives a reconnection request of the first terminal, sending (303), by the first BAS, the reconnection request of the first terminal to a third BAS, so that the first terminal accesses to the network via the third BAS, wherein the third BAS is a BAS different from the second BAS in the at least one BAS, the third BAS is determined by the first BAS by using the BAS pool communication protocol, and a quantity of remaining session resources of the third BAS is greater than or equal to a fourth threshold.

4. The server communication method according to claim 3, wherein before the determining (301), by the first BAS, that a layer-2 tunnel between the first BAS and the second BAS is not clear, the method further comprises:
sending, by the first BAS, a probe packet to the second BAS, wherein the probe packet is used to indicate the second BAS to send a response packet to the first BAS, and the response packet is used by the first BAS to determine whether the layer-2 tunnel between the first BAS and the second BAS is clear; and
the determining, by the first BAS, that the layer-2 tunnel between the first BAS and the second BAS is not clear comprises:
if the first BAS does not receive the response packet within a first time range, determining, by the first BAS, that the layer-2 tunnel between the first BAS and the second BAS is not clear.

5. The server communication method according to claim 3 or 4, wherein after the determining (301), by the first BAS, that the layer-2 tunnel between the first BAS and the second BAS is not clear, the method further comprises:
receiving (304), by the first BAS, a connection request of a second terminal, wherein the second terminal is different from the first terminal; and
when the first BAS determines that the quantity of remaining session resources of the first BAS is less than or equal to the first threshold, sending (305), by the first BAS, the connection request of the second terminal to the third BAS, so that the second terminal accesses to the network via the third BAS.

6. The server communication method according to claim 2, wherein after the sending (103, 207), by the first BAS, the connection request of the first terminal to the second BAS, the method further comprises:
receiving (404), by the first BAS, a resource alarm packet from the second BAS, wherein the resource alarm packet is used to indicate that the quantity of remaining session resources of the second BAS is less than the third threshold; and
when the first BAS receives a connection request of a third terminal, sending (406), by the first BAS, the connection request of the third terminal to a fourth BAS, so that the third terminal accesses to the network via the fourth BAS, wherein the fourth BAS is a BAS different from the second BAS in the at least one BAS, the fourth BAS is determined by the first BAS by using the BAS pool communication protocol, and a quantity of remaining session resources of the fourth BAS is greater than or equal to a fifth threshold.

7. The server communication method according to any one of claims 2 to 4, wherein the method further comprises:
receiving, by the first BAS, a connection request of a fourth terminal; and
when the first BAS determines that the quantity of remaining session resources of the first BAS is greater than the second threshold, determining, by the first BAS, that the fourth terminal accesses to the network via the first BAS.

8. The server communication method according to claim 1 or 2, wherein after the sending (103, 207), by the first BAS, the connection request of the first terminal to the second BAS, the method further comprises:
sending, by the first BAS, uplink traffic to the second BAS, wherein the uplink traffic is received by the first BAS from the first terminal.

9. The server communication method according to claim 1 or 2, wherein after the sending (103, 207), by the first BAS, the connection request of the first terminal to the second BAS, the method further comprises:
sending, by the first BAS, downlink traffic to the first terminal, wherein the downlink traffic is received by the first BAS from the second BAS.

10. A broadband access server, BAS, wherein the BAS is a first BAS in a BAS pool, and the first BAS is configured to implement the method according to any one of claims 1 to 9.

11. A system, wherein the system is a broadband access server, BAS pool comprising at least two BASs, the BAS pool comprises a first BAS, wherein the first BAS is configured to implement the method according to any one of claims 1 to 9.

12. A computer-readable storage medium, comprising program instructions, wherein when the program instructions run on a computer device, the computer device is enabled to perform the method according to any one of claims 1 to 9.

## Patentansprüche

1. Serverkommunikationsverfahren, umfassend:
Empfangen (101, 205) einer Verbindungsanforderung eines ersten Endgeräts durch einen ersten Breitbandzugangsserver, BAS, wobei der erste BAS ein beliebiger BAS in einem BAS-Pool ist; und
wenn der erste BAS bestimmt, dass eine Menge der verbleibenden Sitzungsressourcen des ersten BAS kleiner oder gleich einem ersten Schwellenwert ist und eine Menge der verbleibenden Sitzungsressourcen eines zweiten BAS größer oder gleich einem dritten Schwellenwert ist, Senden (103, 207) der Verbindungsanforderung des ersten Endgeräts durch den ersten BAS an den zweiten BAS, damit das erste Endgerät über den zweiten BAS Zugang zu einem Netzwerk erlangt, wobei der zweite BAS durch den ersten BAS unter Verwendung eines BAS-Pool-Kommunikationsprotokolls bestimmt wird und der zweite BAS ein BAS in dem BAS-Pool ist, der sich von dem ersten BAS unterscheidet.

2. Serverkommunikationsverfahren nach Anspruch 1, wobei das Verfahren vor dem Senden (103, 207) der Verbindungsanforderung des ersten Endgeräts durch den ersten BAS an den zweiten BAS ferner Folgendes umfasst:
wenn die Menge der verbleibenden Sitzungsressourcen des ersten BAS kleiner oder gleich einem zweiten Schwellenwert ist, Senden (202) eines Ressourcenanforderungspakets durch den ersten BAS gemäß dem BAS-Pool-Kommunikationsprotokoll an mindestens einen BAS in dem BAS-Pool mit Ausnahme des ersten BAS, wobei der mindestens eine BAS den zweiten BAS umfasst und das Ressourcenanforderungspaket verwendet wird, um dem zweiten BAS anzuweisen, die Menge der verbleibenden Sitzungsressourcen des zweiten BAS an den ersten BAS zu senden; und
Empfangen (203) der Menge der verbleibenden Sitzungsressourcen des zweiten BAS von dem zweiten BAS durch den ersten BAS.

3. Serverkommunikationsverfahren nach Anspruch 2, wobei das Verfahren nach dem Senden (103, 207) der Verbindungsanforderung des ersten Endgeräts durch den ersten BAS an den zweiten BAS ferner Folgendes umfasst:
Bestimmen (301) durch den ersten BAS, dass ein Schicht-2-Tunnel zwischen dem ersten BAS und dem zweiten BAS nicht frei ist; und
wenn der erste BAS eine Wiederverbindungsanforderung des ersten Endgeräts empfängt, Senden (303) der Wiederverbindungsanforderung des ersten Endgeräts durch den ersten BAS an einen dritten BAS, damit das erste Endgerät über den dritten BAS Zugang zu dem Netzwerk erlangt, wobei der dritte BAS ein BAS ist, der sich von dem zweiten BAS in dem mindestens einen BAS unterscheidet, der dritte BAS durch den ersten BAS unter Verwendung des BAS-Pool-Kommunikationsprotokolls bestimmt wird und eine Menge der verbleibenden Sitzungsressourcen des dritten BAS größer oder gleich einem vierten Schwellenwert ist.

4. Serverkommunikationsverfahren nach Anspruch 3, wobei das Verfahren vor dem Bestimmen (301) durch den ersten BAS, dass ein Schicht-2-Tunnel zwischen dem ersten BAS und dem zweiten BAS nicht frei ist, ferner Folgendes umfasst:
Senden eines Prüfpakets durch den ersten BAS an den zweiten BAS, wobei das Prüfpaket verwendet wird, um den zweiten BAS anzuweisen, ein Antwortpaket an den ersten BAS zu senden, und das Antwortpaket durch den ersten BAS verwendet wird, um zu bestimmen, ob der Schicht-2-Tunnel zwischen dem ersten BAS und dem zweiten BAS frei ist; und
das Feststellen durch den ersten BAS, dass der Schicht-2-Tunnel zwischen dem ersten BAS und dem zweiten BAS nicht frei ist, Folgendes umfasst:
wenn der erste BAS das Antwortpaket nicht innerhalb eines ersten Zeitbereichs empfängt, Bestimmen durch den ersten BAS, dass der Schicht-2-Tunnel zwischen dem ersten BAS und dem zweiten BAS nicht frei ist.

5. Serverkommunikationsverfahren nach Anspruch 3 oder 4, wobei das Verfahren nach dem Bestimmen (301) durch den ersten BAS, dass der Schicht-2-Tunnel zwischen dem ersten BAS und dem zweiten BAS nicht frei ist, ferner Folgendes umfasst:
Empfangen (304) einer Verbindungsanforderung eines zweiten Endgeräts durch den ersten BAS, wobei sich das zweite Endgerät von dem ersten Endgerät unterscheidet; und
wenn der erste BAS bestimmt, dass die Menge der verbleibenden Sitzungsressourcen des ersten BAS kleiner oder gleich dem ersten Schwellenwert ist, Senden (305) der Verbindungsanforderung des zweiten Endgeräts durch den ersten BAS an den dritten BAS, damit das zweite Endgerät über den dritten BAS Zugang zu dem Netzwerk erlangt.

6. Serverkommunikationsverfahren nach Anspruch 2, wobei das Verfahren nach dem Senden (103, 207) der Verbindungsanforderung des ersten Endgeräts durch den ersten BAS an den zweiten BAS ferner Folgendes umfasst:
Empfangen (404) eines Ressourcenalarmpakets von dem zweiten BAS durch den ersten BAS, wobei das Ressourcenalarmpaket verwendet wird, um anzuzeigen, dass die Menge der verbleibenden Sitzungsressourcen des zweiten BAS kleiner als der dritte Schwellenwert ist; und
wenn der erste BAS eine Verbindungsanforderung eines dritten Endgeräts empfängt, Senden (406) der Verbindungsanforderung des dritten Endgeräts durch den ersten BAS an einen vierten BAS, damit das dritte Endgerät über den vierten BAS Zugang zu dem Netzwerk erlangt, wobei der vierte BAS ein BAS ist, der sich von dem zweiten BAS in dem mindestens einen BAS unterscheidet, der vierte BAS durch den ersten BAS unter Verwendung des BAS-Pool-Kommunikationsprotokolls bestimmt wird und eine Menge der verbleibenden Sitzungsressourcen des vierten BAS größer oder gleich einem fünften Schwellenwert ist.

7. Serverkommunikationsverfahren nach einem der Ansprüche 2 bis 4, wobei das Verfahren ferner Folgendes umfasst:
Empfangen einer Verbindungsanforderung eines vierten Endgeräts durch den ersten BAS; und
wenn der erste BAS bestimmt, dass die Menge der verbleibenden Sitzungsressourcen des ersten BAS größer als der zweite Schwellenwert ist, Bestimmen durch den ersten BAS, dass das vierte Endgerät über den ersten BAS Zugang zu dem Netzwerk erlangt.

8. Serverkommunikationsverfahren nach Anspruch 1 oder 2, wobei das Verfahren nach dem Senden (103, 207) der Verbindungsanforderung des ersten Endgeräts durch den ersten BAS an den zweiten BAS ferner Folgendes umfasst:
Senden von Uplink-Verkehr durch den ersten BAS an den zweiten BAS, wobei der Uplink-Verkehr durch den ersten BAS von dem ersten Endgerät empfangen wird.

9. Serverkommunikationsverfahren nach Anspruch 1 oder 2, wobei das Verfahren nach dem Senden (103, 207) der Verbindungsanforderung des ersten Endgeräts durch den ersten BAS an den zweiten BAS ferner Folgendes umfasst:
Senden von Downlink-Verkehr durch den ersten BAS an das erste Endgerät, wobei der Downlink-Verkehr durch den ersten BAS von dem zweiten BAS empfangen wird.

10. Breitbandzugangsserver, BAS, wobei der BAS ein erster BAS in einem BAS-Pool ist und der erste BAS dazu konfiguriert ist, das Verfahren nach einem der Ansprüche 1 bis 9 zu implementieren.

11. System, wobei das System ein Breitbandzugangsserverpool, BAS-Pool, ist, umfassend mindestens zwei BASs, wobei der BAS-Pool einen ersten BAS umfasst, wobei der erste BAS dazu konfiguriert ist, das Verfahren nach einem der Ansprüche 1 bis 9 zu implementieren.

12. Computerlesbares Speichermedium, umfassend Programmanweisungen, wobei, wenn die Programmanweisungen auf einer Computervorrichtung ausgeführt werden, die Computervorrichtung in die Lage versetzt wird, das Verfahren nach einem der Ansprüche 1 bis 9 durchzuführen.

## Revendications

1. Procédé de communication de serveur, comprenant :
la réception (101, 205), par un premier serveur d'accès à large bande, BAS, d'une demande de connexion d'un premier terminal, dans lequel le premier BAS est un quelconque BAS dans un pool de BAS ; et
lorsque le premier BAS détermine le fait qu'une quantité de ressources de session restantes du premier BAS est inférieure ou égale à un premier seuil et qu'une quantité de ressources de session restantes d'un deuxième BAS est supérieure ou égale à un troisième seuil, l'envoi (103, 207), par le premier BAS, de la demande de connexion du premier terminal au deuxième BAS, de sorte que le premier terminal accède à un réseau par le biais du deuxième BAS, dans lequel le deuxième BAS est déterminé par le premier BAS à l'aide d'un protocole de communication de pool de BAS, et le deuxième BAS est un BAS dans le pool de BAS qui est différent du premier BAS.

2. Procédé de communication de serveur selon la revendication 1, dans lequel avant l'envoi (103, 207), par le premier BAS, de la demande de connexion du premier terminal au deuxième BAS, le procédé comprend également :
lorsque la quantité de ressources de session restantes du premier BAS est inférieure ou égale à un deuxième seuil, l'envoi (202), par le premier BAS selon le protocole de communication de pool de BAS, d'un paquet de demande de ressources à au moins un BAS dans le pool de BAS à l'exception du premier BAS, dans lequel l'au moins un BAS comprend le deuxième BAS, et le paquet de demande de ressources est utilisé pour indiquer au deuxième BAS d'envoyer la quantité de ressources de session restantes du deuxième BAS au premier BAS ; et
la réception (203), par le premier BAS, de la quantité de ressources de session restantes du deuxième BAS à partir du deuxième BAS.

3. Procédé de communication de serveur selon la revendication 2, dans lequel après l'envoi (103, 207), par le premier BAS, de la demande de connexion du premier terminal au deuxième BAS, le procédé comprend également :
la détermination (301), par le premier BAS, du fait qu'un tunnel de couche 2 entre le premier BAS et le deuxième BAS n'est pas clair ; et
lorsque le premier BAS reçoit une demande de reconnexion du premier terminal, l'envoi (303), par le premier BAS, de la demande de reconnexion du premier terminal à un troisième BAS, de sorte que le premier terminal accède au réseau par le biais du troisième BAS, dans lequel le troisième BAS est un BAS différent du deuxième BAS dans l'au moins un BAS, le troisième BAS est déterminé par le premier BAS à l'aide du protocole de communication de pool de BAS, et une quantité de ressources de session restantes du troisième BAS est supérieure ou égale à un quatrième seuil.

4. Procédé de communication de serveur selon la revendication 3, dans lequel avant la détermination (301), par le premier BAS, du fait qu'un tunnel de couche 2 entre le premier BAS et le deuxième BAS n'est pas clair, le procédé comprend également :
l'envoi, par le premier BAS, d'un paquet de sonde au deuxième BAS, dans lequel le paquet de sonde est utilisé pour indiquer au deuxième BAS d'envoyer un paquet de réponse au premier BAS, et le paquet de réponse est utilisé par le premier BAS pour déterminer le fait de savoir si le tunnel de couche 2 entre le premier BAS et le deuxième BAS est clair ; et
la détermination, par le premier BAS, du fait que le tunnel de couche 2 entre le premier BAS et le deuxième BAS n'est pas clair comprend :
si le premier BAS ne reçoit pas le paquet de réponse dans un premier intervalle de temps, la détermination, par le premier BAS, du fait que le tunnel de couche 2 entre le premier BAS et le deuxième BAS n'est pas clair.

5. Procédé de communication de serveur selon la revendication 3 ou 4, dans lequel après la détermination (301), par le premier BAS, du fait que le tunnel de couche 2 entre le premier BAS et le deuxième BAS n'est pas clair, le procédé comprend également :
la réception (304), par le premier BAS, d'une demande de connexion d'un deuxième terminal, dans lequel le deuxième terminal est différent du premier terminal ; et
lorsque le premier BAS détermine le fait que la quantité de ressources de session restantes du premier BAS est inférieure ou égale au premier seuil, l'envoi (305), par le premier BAS, de la demande de connexion du deuxième terminal au troisième BAS, de sorte que le deuxième terminal accède au réseau par le biais du troisième BAS.

6. Procédé de communication de serveur selon la revendication 2, dans lequel après l'envoi (103, 207), par le premier BAS, de la demande de connexion du premier terminal au deuxième BAS, le procédé comprend également :
la réception (404), par le premier BAS, d'un paquet d'alarme de ressource à partir du deuxième BAS, dans lequel le paquet d'alarme de ressource est utilisé pour indiquer que la quantité de ressources de session restantes du deuxième BAS est inférieure au troisième seuil ; et
lorsque le premier BAS reçoit une demande de connexion d'un troisième terminal, l'envoi (406), par le premier BAS, de la demande de connexion du troisième terminal à un quatrième BAS, de sorte que le troisième terminal accède au réseau par le biais du quatrième BAS, dans lequel le quatrième BAS est un BAS différent du deuxième BAS dans l'au moins un BAS, le quatrième BAS est déterminé par le premier BAS à l'aide du protocole de communication de pool de BAS, et une quantité de ressources de session restantes du quatrième BAS est supérieure ou égale à un cinquième seuil.

7. Procédé de communication de serveur selon l'une quelconque des revendications 2 à 4, dans lequel le procédé comprend également :
la réception, par le premier BAS, d'une demande de connexion d'un quatrième terminal ; et
lorsque le premier BAS détermine le fait que la quantité de ressources de session restantes du premier BAS est supérieure au deuxième seuil, la détermination, par le premier BAS, du fait que le quatrième terminal accède au réseau par le biais du premier BAS.

8. Procédé de communication de serveur selon la revendication 1 ou 2, dans lequel après l'envoi (103, 207), par le premier BAS, de la demande de connexion du premier terminal au deuxième BAS, le procédé comprend également :
l'envoi, par le premier BAS, d'un trafic de liaison montante au deuxième BAS, dans lequel le trafic de liaison montante est reçu par le premier BAS à partir du premier terminal.

9. Procédé de communication de serveur selon la revendication 1 ou 2, dans lequel après l'envoi (103, 207), par le premier BAS, de la demande de connexion du premier terminal au deuxième BAS, le procédé comprend également :
l'envoi, par le premier BAS, d'un trafic de liaison descendante au premier terminal, dans lequel le trafic de liaison descendante est reçu par le premier BAS à partir du deuxième BAS.

10. Serveur d'accès à large bande, BAS, dans lequel le BAS est un premier BAS dans un pool de BAS, et le premier BAS est configuré pour mettre en œuvre le procédé selon l'une quelconque des revendications 1 à 9.

11. Système, dans lequel le système est un serveur d'accès à large bande, un pool de BAS comprenant au moins deux BAS, le pool de BAS comprend un premier BAS, dans lequel le premier BAS est configuré pour mettre en œuvre le procédé selon l'une quelconque des revendications 1 à 9.

12. Support de stockage lisible par ordinateur, comprenant des instructions de programme, dans lequel lorsque les instructions de programme s'exécutent sur un dispositif informatique, le dispositif informatique est activé pour réaliser le procédé selon l'une quelconque des revendications 1 à 9.
